# EUROPEAN PATENT APPLICATION

(11) **EP 3 689 985 A1**
(43) Date of publication of application: **05.08.2020**
(21) Application number: 19154579.7
(22) Date of filing: 30.01.2019
(51) Int. Cl.: C09D 133/06, C04B 26/06

(54) **ORGANIC RENDER COMPOSITION**

(71) Applicant: Heck Wall Systems GmbH, 95615 Marktredwitz (DE); Rockwool International A/S, 2640 Hedehusene (DK)
(72) Inventor: SCHWÖD, Michaela Anneliese, 2640 Hedehusene (DK)
(74) Representative: Letzelter, Felix Phillip

(57) **Abstract**

The invention relates to an organic render composition, comprising
- a component (i) comprising at least one acrylic ester-styrene-copolymer;
- a component (ii) comprising a first earth alkali carbonate having a D₅₀ of 10 to 60 µm, in particular 20 to 50 µm and a second earth alkali carbonate having a D₅₀ of 3 to 10 µm, in particular 4 to 8 µm;
- a component (iii) comprising at least one compound selected from
• a cellulose ether;
• a phyllosilicate;
• a non-ionogenic fatty acid derivative.

## Description

### FIELD OF THE INVENTION

The present invention relates to an organic render composition having improved properties and the use of such an organic render composition, in particular for exterior use on a building substrate like e.g. facades, walls or ceilings of a building.

### BACKGROUND OF THE INVENTION

Organic render compositions, also called organic plaster compositions, are compositions based on organic binders, which are building materials used for the protective and decorative coating of building substrates like e.g. facades, walls or ceilings of a building. Reference is e.g. made to European Standard EN 15824:2017-09 containing definitions and final performance requirements and which standard includes relevant categories to designate renders and plasters. Typically, such render compositions are factory-made and manufactured in paste form, ready to use, very seldom in powder form. I.e. the render or plaster composition is pre-mixed with water and ready to be applied as a workable paste to the building substrate.

The general problem with previously known organic render compositions is that certain desirable properties are difficult to combine.
In principle, such organic render composition should on the one hand have a long, extended processing time which allows the render to be structured respectively textured for a long time after the aqueous paste has been applied and before it properly dries and cures on the building substrate.
On the other hand, the compositions should reach the condition of rain fastness as soon as possible, meaning a certain initial curing to prevent wash-off. This is in particular important when the organic render compositions are applied on facades of a building which is exposed to certain weather conditions, i.e. dry or humid atmosphere, high or low temperature, rain etc.

Previous attempts to solve these problems resulted in multi-component, typically two-component systems, in which components have to be mixed on site previous to the use of the composition. Such systems, however, lead to higher costs and increase the risk of user mistakes and handling defects when the components are e.g. not mixed in the right ratios. Other drawbacks of such multi-component systems to be stated are e.g. blistering or efflorescence.

Another approach is the provision of organic render compositions, which contain amine components. In some cases the addition of these amine components have improved the quick rain fastness but provided a limited or negative impact on the processing time. Moreover, these amine components have a strong odor and at the same time represent a health risk for the workers handling the compositions.

Yet a further problem with previously known organic render compositions is that they have a limited temperature range in which they can be used. This leads to the problem that usually separate summer and winter recipes have to be used which complicates the delivery and use of the organic render compositions and adds costs.

### SUMMARY OF THE INVENTION

Accordingly, it was an object of the present invention to provide an organic render composition which combines the properties of long processing time and early rain fastness and at the same to overcome the disadvantages of the previously known compositions. In particular, the compositions should not require multiple components to be mixed on site and should not contain chemical components which have a strong odor and/or are hazardous for the health of the workers handling the compositions.
It was a further object of the present invention to provide organic render compositions which provide a broad temperature and humidity range of usability and do not require separate compositions for summer and winter use.
It was yet another object of the present invention to provide a use for such organic render compositions.

In accordance with the first aspect of the present invention, there is provided an organic render composition, comprising
- a component (i) comprising at least one acrylic ester-styrene-copolymer;
- a component (ii) comprising a first earth alkali carbonate having a D₅₀ of 10 to 60 µm, in particular 20 to 50 µm and a second earth alkali carbonate having a D₅₀ of 3 to 10 µm, in particular 4 to 8 µm;
- a component (iii) comprising at least one compound selected from
   - a cellulose ether;
   - a phyllosilicate;
   - a non-ionogenic fatty acid derivative.

It was surprisingly found that by the specific composition described above, organic render compositions can be provided which combine the properties of a long processing time and early rain fastness. A further advantage of the compositions according to the present invention is that they can be provided as a factory-made one-component system which is ready to be used on site. The addition of further components is not necessary. Further, the organic render compositions according to the present invention do not contain an amine component and therefore overcomes discomfort and health issues associated with previously known organic render compositions containing such amines.

A further surprising advantage of the organic render composition according to the present invention is that they provide a broad temperature and humidity range of usability which makes it possible that a single composition can be used in summer and winter and also in different climate zones.

In accordance with a second aspect of the present invention, there is provided a use of an organic render composition as described for exterior use on a building substrate, like e.g. facades, walls or ceilings of a building.

### DESCRIPTION OF THE PREFERRED EMBODIMENTS

The organic render composition according to the present invention comprises:
- a component (i) comprising at least one acrylic ester-styrene-copolymer;
- a component (ii) comprising a first earth alkali carbonate having a D₅₀ of 10 to 60 µm, in particular 20 to 50 µm and a second earth alkali carbonate having a D₅₀ of 3 to 10 µm, in particular 4 to 8 µm;
- a component (iii) comprising at least one compound selected from
   - a cellulose ether;
   - a phyllosilicate;
   - a non-ionogenic fatty acid derivative.

### COMPONENT (i) OF THE RENDER COMPOSITION

Component (i) of the organic render composition comprises at least one acrylic ester-styrene-copolymer.

There has been an understanding in the technical field that such acrylic ester-styrene-copolymers are prone to yellowing with age and they were therefore considered to be not useful for such compositions.

The present inventors have, however, found that in the specific organic render compositions according to the present invention, the use of acrylic ester-styrene-copolymers does not result in a yellowing with age of the applied render composition.

The acrylic ester-styrene-copolymers can be derivatized acrylic ester-styrene-copolymers. In one embodiment, the acrylic ester-styrene-copolymers are derivatized.

In one embodiment, the composition comprises a component (i) in an amount of 5 to 20 wt.-%, in particular 6 to 15 wt.-%, based on the total weight of the composition.

In one embodiment, the component (i) comprises at least one acrylic ester-styrene-copolymer and at least one silicon resin.

While there is no principle limitation on the amount of the component (i) included in the organic render compositions according to the present invention, component (i) preferably comprises at least one acrylic ester-styrene-copolymer in an amount of 5 to 20 wt.-%, in particular 6 to 15 wt.-%, and at least one silicon resin in an amount of up to 15 wt.-%, in particular 0.1 to 8 wt.-%, based on the total weight of the organic render composition.

### COMPONENT (ii) OF THE RENDER COMPOSITION

Component (ii) of the organic render composition comprises a first earth alkali carbonate having a D₅₀ of 10 to 60 µm, in particular 20 to 50 µm and a second earth alkali carbonate having a D₅₀ of 3 to 10 µm, in particular 4 to 8 µm.

The most widely used method of describing particle size distributions are D values. In the context of the present invention, the D₅₀ is preferably measured by Laser diffraction methods which are widely used for particle sizing in many different applications. Diffraction laser particle size analyzer are commercially available, by way of example the CILAS 920 tool by CILAS, France is mentioned. The measurements are carried out according to the instructions of the manufacturer.

The inventors of the present invention have surprisingly found that by combining two earth alkali carbonates having different particle sizes as described above, the properties of the organic render compositions according to the present invention can significantly be improved. The inventors of the present invention have in particular found that the combination of earth alkali carbonates having two different particle sizes as indicated above allows the organic render composition according to the present invention to have a long processing time and at the same time provides for an early rain fastness after the render composition has been applied to the building substrate.

In one embodiment, component (ii) additionally comprises diatomaceous earth, in particular calcinated diatomaceous earth.

In one embodiment, component (ii) comprises
- an earth alkali carbonate having a D₅₀ of 10 to 60 µm, in particular 20 to 50 µm, in an amount of 5 to 30 wt.-%, in particular 9 to 17 wt.-%, based on the total weight of the organic render composition;
- an earth alkali carbonate having a D₅₀ of 3 to 10 µm, in particular 4 to 8 µm, in an amount of 1 to 15 wt.-%, in particular 4 to 12 wt.-%, based on the total weight of the organic render composition;
- a diatomaceous earth in an amount of 0 to 10 wt.-%, in particular 2 to 8 wt.-%, based on the total weight of the organic render composition.

### COMPONENT (iii)

Component (iii) of the organic render compositions according to the present invention comprises at least one compound selected from
- a cellulose ether;
- a phyllosilicate;
- a non-ionogenic fatty acid derivative.

The addition of this component to the organic render compositions improves the rheology and processing time of the compositions.

In one embodiment, component (iii) comprises at least one compound selected from
- a cellulose ether in an amount of 0 to 0.4 wt.-%, in particular 0.01 to 0.3 wt.-%, based on the total weight of the organic render composition;
- a phyllosilicate in an amount of 0 to 2 wt.-%, in particular 0.01 to 0.7 wt.-%, based on the total weight of the organic render composition;
- a non-ionogenic fatty acid derivative in an amount of 0 to 3 wt.-%, in particular 0.2 to 2.5 wt.-%, based on the total weight of the organic render composition.

### FURTHER OPTIONAL COMPONENTS

In one embodiment, the organic render compositions according to the present invention comprise an additional component in form of a component (iv), whereby component (iv) comprises at least one compound selected from
- an organic fiber material, e.g. a polyethylene fiber material;
   - a mineral fiber material, e.g. a fiber material based on calcium, aluminum, magnesium silicate fibers; and/or
   - a glass fiber material.

Such fibre materials can improve the mechanical properties of the organic render compositions.

As a further component, the organic render compositions according to the present invention can additionally comprise water, preferably in an amount of up to 20 wt.-%, in particular 5 to 15 wt.-%, based on the total weight of the organic render composition.

In one embodiment, the organic render compositions according to the present invention comprise further additives.

In one embodiment, the organic render compositions according to the present invention further comprise at least one additive selected from
- pigments;
- flame retarders;
- aggregates, like e.g. calcium carbonate and/or dolomite having a grain fraction from 0.5 to 6 mm, in particular 0.5 to 3 mm;
- dispersants selected from polyphosphates;
- rheology aids, in particular selected from polycarboxylates and/or methacrylic acid-acrylic acid ester copolymers and polyurethanes;
- pH adjusters;
- foam inhibitors, in particular in form of mineral oils and/or silicon based inhibitors;
- film builders, in particular in form of aliphatic dicarboxylic acid esters;
- hydrophobing agents, in particular in form of aqueous emulsions of polysilanes and polysiloxanes;
- biocides, in particular on the basis of isothiazolinones, in particular octyl isothiazolinones, CIT, MIT, BIT, CMIT, and/or zinc pyrothiones, and/or zinc oxide, and/or Diuron, and/or Terbutryn.

In one embodiment, the present invention is directed to an organic render composition consisting essentially of
- a component (i) comprising at least one acrylic ester-styrene-copolymer and optionally at least one silicon resin;
- a component (ii) comprising a first earth alkali carbonate having a D₅₀ of 10 to 60 µm, in particular 20 to 50 µm, and a second earth alkali carbonate having a D₅₀ of 3 to 10 µm, in particular 4 to 8 µm;
- a component (iii) comprising at least one compound selected from
   - a cellulose ether;
   - a phyllosilicate;
   - a non-ionogenic fatty acid derivative;
- optionally a component (iv) comprising at least one compound selected from
   - a polyethylene fiber material;
   - a fiber material based on calcium, aluminum, magnesium silicate fibers;
   - a glass fiber material;
- optionally water, preferably in an amount of up to 20 wt.-%, in particular 5 to 15 wt.-%, based on the total weight of the organic render composition;
- optionally one or more pigments;
- optionally one or more flame retarders;
- aggregates, like e.g. calcium carbonate and/or dolomite having a grain fraction from 0.5 to 6 mm, in particular 0.5 to 3 mm;
- optionally one or more dispersants selected from polyphosphates;
- optionally one or more rheology aids, in particular selected from polycarboxylates and/or methacrylic acid-acrylic acid ester copolymers and polyurethanes;
- optionally one or more pH adjusters;
- optionally one or more foam inhibitors, in particular in form of mineral oils and silicon based inhibitors;
- optionally one or more film builders, in particular in form of aliphatic dicarboxylic acid esters;
- optionally one or more hydrophobing agents, in particular in form of aqueous emulsions of polysilanes and polysiloxanes;
   - optionally one or more biocides, in particular on the basis of isothiazolinones, in particular octyl isothiazolinones, CIT, MIT, BIT, CMIT, and/or zinc pyrothiones, and/or zinc oxide, and/or Diuron, and/or Terbutryn.

In a further embodiment, the present invention is directed to an organic render composition consisting essentially of
- a component (i) comprising at least one acrylic ester-styrene-copolymer in an amount of 5 to 20 wt.-%, in particular 6 to 15 wt.-% and optionally at least one silicon resin in an amount of up to 15 wt.-%, in particular 0.1 to 8 wt.-% based on the total weight of the organic render composition;
- a component (ii) comprising a first earth alkali carbonate having a D₅₀ of 10 to 60 µm, in particular 20 to 50 µm, and a second earth alkali carbonate having a D₅₀ of 3 to 10 µm, in particular 4 to 8 µm;
- a component (iii) comprising at least one compound selected from
   - a cellulose ether in an amount of 0 to 0.4 wt.-%, in particular 0.01 to 0.3 wt.-% based on the total weight of the organic render composition;
   - a phyllosilicate in an amount of 0 to 2 wt.-%, in particular 0.01 to 0.7 wt.-% based on the total weight of the organic render composition;
   - a non-ionogenic fatty acid derivative in an amount of 0 to 3 wt.-%, in particular 0.2 to 2.5 wt.-% based on the total weight of the organic render composition;
   - a component (iv) comprising at least one compound selected from
   - a polyethylene fiber material;
   - a fiber material based on calcium, aluminum, magnesium silicate fibers;
   - a glass fiber material;
- optionally water, preferably in an amount of up to 20 wt.-%, in particular 5 to 15 wt.-%, based on the total weight of the organic render composition;
- optionally one or more pigments;
- optionally one or more flame retarders;
- optionally one or more aggregates, like e.g. calcium carbonate and/or dolomite having a grain fraction from 0.5 to 6 mm, in particular 0.5 to 3 mm;
- optionally one or more dispersants selected from polyphosphates;
- optionally one or more rheology aids, in particular selected from polycarboxylates and/or methacrylic acid-acrylic acid ester copolymers and polyurethanes;
- optionally one or more pH adjusters;
- optionally one or more foam inhibitors, in particular in form of mineral oils and silicon based inhibitors;
- optionally one or more film builders, in particular in form of aliphatic dicarboxylic acid esters;
- optionally one or more hydrophobing agents, in particular in form of aqueous emulsions of polysilanes and polysiloxanes;
- optionally one or more biocides, in particular on the basis of isothiazolinones, in particular octyl isothiazolinones, CIT, MIT, BIT, CMIT, and/or zinc pyrothiones, and/or zinc oxide, and/or Diuron, and/or Terbutryn.

In one embodiment, the organic render composition according to the present invention does not contain amine compounds.

### CHARACTERISTIC PROPERTIES OF THE ORGANIC RENDER COMPOSITIONS

The organic render compositions according to the present invention are characterized by a unique combination of features. Determination of said features will be explained further down the description. It's important to note that the respective test methods are not related to harmonized standards and that they are carried out under lab conditions.

In one embodiment, the organic render composition according to the present invention has a processing time of up to 50 minutes, in particular up to 45 minutes, in particular 20 to 35 minutes.

In one embodiment, the organic render composition according to the present invention achieves rain fastness after 12 to 24 hours, in particular after about 16 hours.

In one embodiment, the organic render composition according to the present invention is applicable within a temperature range of 1 to 30 °C, and up to 95 % relative humidity.

In one embodiment, the organic render composition according to the present invention has a processing time of 20 to 35 minutes, in particular 25 to 35 minutes (at 16 to 30°C and 40 to 60 % relative humidity), and achieves rain fastness after 12 to 24 hours, in particular after about 16 hours.

In a further embodiment, the organic render composition according to the present invention has a processing time of 20 to 35 minutes, in particular 25 to 35 minutes, achieves rain fastness after 12 to 24 hours, in particular after about 16 hours, and is applicable within a temperature range of 1 to 30 °C, and up to 95 % relative humidity.

Determination of the early rain fastness in the context of this patent application is carried out according to an internal test protocol as follows:
Samples of primed fiber cement plates and the organic render composition were conditioned for 10 hours at 7 °C and 90% humidity in the device Heraeus HC 0033, a climatic test chamber (providing circulating air). The primed fiber cement plates were then coated and structured with the organic render composition. The coated fiber cement plates were stored for 9, 16, 20, 24 hours respectively at 7 °C and 90% humidity in the device Heraeus HC 0033 (providing circulating air) prior to testing early rain fastness. For testing, the coated plates were sprayed with water at a pressure of 0.6 bar for 10 minutes. The coating was assessed after 1, 2, 3, 4, 5, and 10 minutes. The samples were assessed with the grades 1 (unchanged surface), 2 (very superficial abrasion under intense friction, low solvatisation of slurry), 3 (low friction reveals grains, removal of grains under intense friction, solvatisation of slurry revealing grains), 4 (intense softening, intense solvatisation of slurry revealing grains, removal of grain under medium friction), 5 (extreme softening, material can be moved, partial solvatisation until background), and 6 (coating dissolves under low force and/or complete solvatisation until background).

Determination of the processing time in the context of this patent application is carried out according to an internal test protocol as follows:
Samples of primed fiber cement plates and the organic render composition were provided. The fiber cement plates had been primed more than 24 hours prior to the test. The plates were coated and structured with the organic render composition. The processing time was monitored and assessed according to the grades 1 (>25 minutes at ambient air), 2 (>20 minutes at ambient air), 3 (15 to 20 minutes at ambient air), 4 (<15 minutes at ambient air), and 5 (<10 minutes at ambient air).

### USE OF THE ORGANIC RENDER COMPOSITION

The present invention is also directed to use of an organic render composition according to the present invention for exterior use on a building substrate, like e.g. facades, walls or ceilings of a building.

The specific advantages of the organic render composition according to the present invention, in particular the combination of a long extended processing time and early rain fastness and the broad temperature and humidity range of applicability are in particular useful when the organic render compositions are employed for exterior use on a building substrate which is exposed to weather conditions like surprising rainfall and different temperatures.

In one embodiment, the organic render compositions according to the present invention are used on an insulated building substrate.

In one embodiment, the organic render compositions according to the present invention are used for exterior use as a component in an External Thermal Insulation Composite System (ETICS).

The present invention is further illustrated by the following examples:

### EXAMPLES

The applicant has conducted a series of experiments, which demonstrated that the specific combination of features of the organic render compositions according to the present invention enabled surprisingly improved properties compared to prior art organic render compositions ("commercial reference products"). Two internal test protocols were used to assess the compositions:
Determination of the early rain fastness according to an internal test protocol

Samples of primed fiber cement plates and the organic render composition were conditioned for 10 hours at 7 °C and 90% humidity in the climatic test chamber Heraeus HC 0033 (providing circulating air). The primed fiber cement plates were then coated and structured with the organic render composition. The coated fiber cement plates were stored for 9, 12, 16, 20, 24 hours respectively at 7 °C and 90% humidity in the device Heraeus HC 0033 (providing circulating air) prior to testing early rain fastness. For testing, the coated plates were sprayed with water at a pressure of 0.6 bar for 10 minutes. The coating was assessed after 1, 2, 3, 4, 5, and 10 minutes. The samples were assessed with the grades 1 (unchanged surface), 2 (very superficial abrasion under intense friction, low solvatisation of slurry), 3 (low friction reveals grains, removal of grains under intense friction, solvatisation of slurry revealing grains), 4 (intense softening, intense solvatisation of slurry revealing grains, removal of grain under medium friction), 5 (extreme softening, material can be moved, partial solvatisation until background), and 6 (coating dissolves under low force and/or complete solvatisation until background).

Determination of the processing time according to an internal test protocol:
Samples of primed fiber cement plates and the organic render composition were provided. The fiber cement plates had been primed more than 24 hours prior to the test. The plates were coated and structured with the organic render composition. The processing time was monitored and assessed according to the grades 1 (>25 minutes at ambient air), 2 (>20 minutes at ambient air), 3 (15 to 20 minutes at ambient air), 4 (<15 minutes at ambient air), and 5 (<10 minutes at ambient air).

Two compositions of the present invention showed grade 1 for the processing time (at least 25 minutes at ambient air). Many of the prior art compositions had shorter processing times. Table 1 shows the processing times of several compositions of prior art and of two compositions according to the invention.

Further, Table 1 shows the early rain fastness of these two compositions of the invention in comparison with prior art compositions. The grade for the early rain fastness is shown in dependency of the time between coating and testing (9, 12, 16, 20, 24 or 48 hours) and of the time of exposure to water. The early rain fastness is clearly improved compared to most compositions of prior art. Prior art compositions with good results for the processing time tend to receive a poor grade for the early rain fastness (at least within the first 16 h after application) or have an extreme smell of ammonia. This table shows that it is particularly difficult to develop a composition with good early rain fastness and processing time.

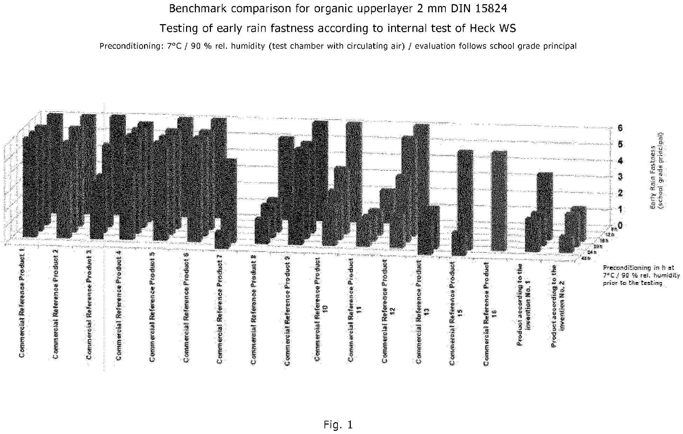

The results of the early rain fastness test are also shown in Figure 1. The time between coating and testing is shown on the z-axis, the school grade for the early rain fastness of the corresponding composition is shown on the y-axis. The tests were carried out on samples of approx. 2 mm thick organic render according to European Standard EN 15824:2017-09, prepared as has been described before.

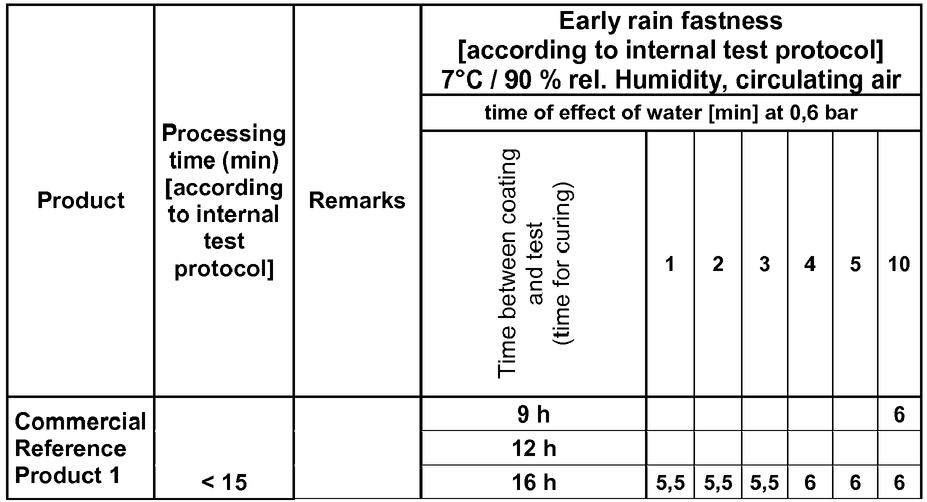

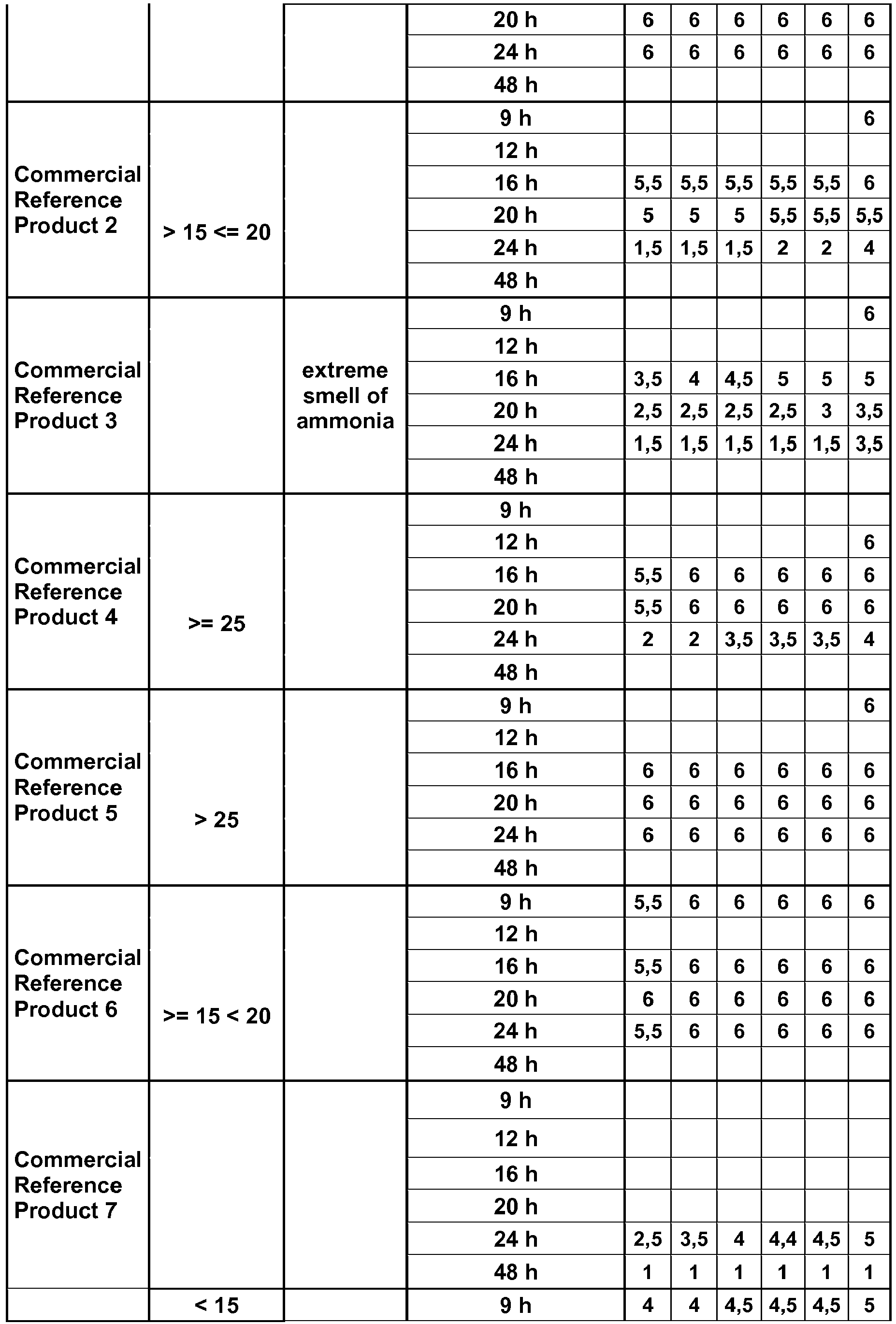

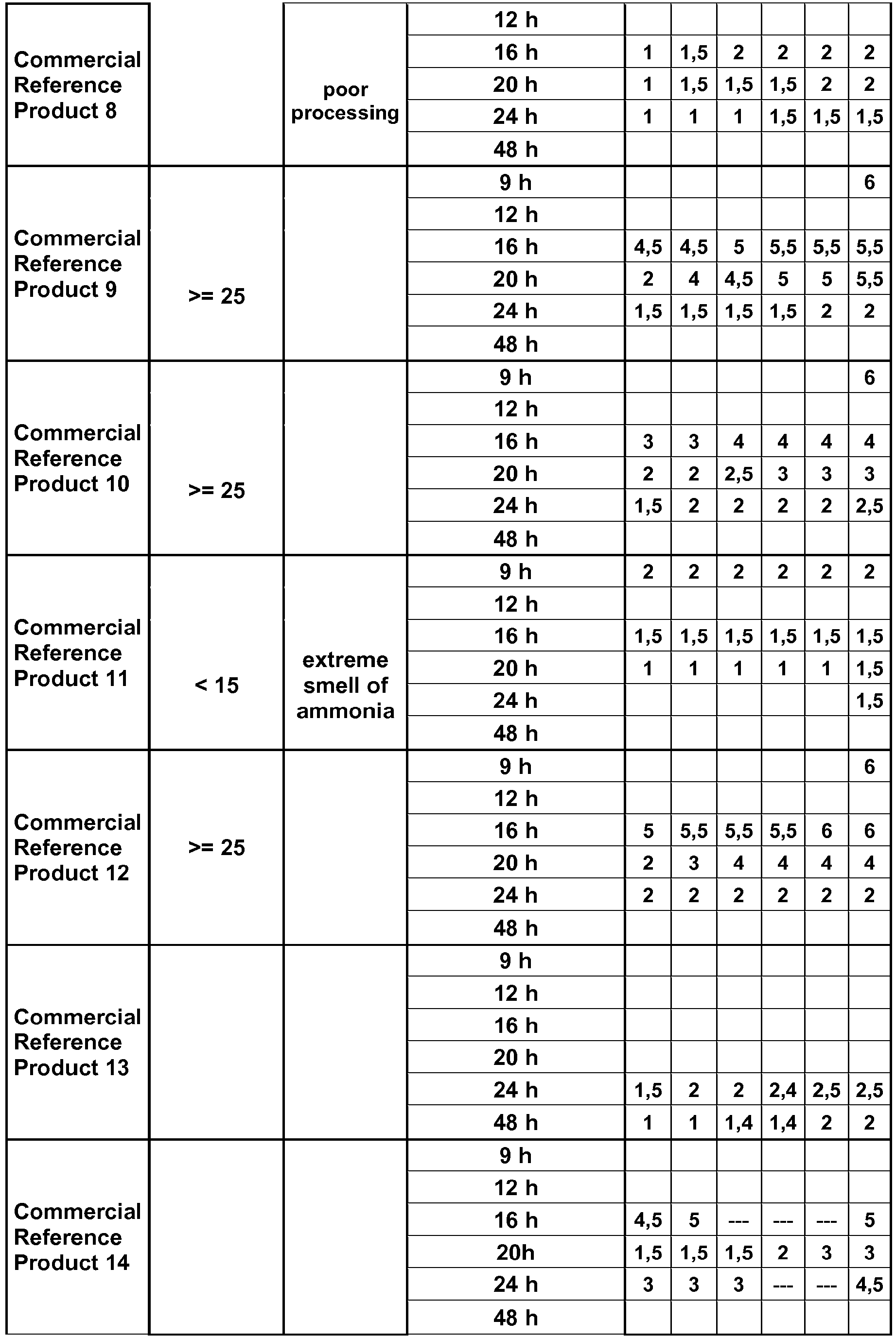

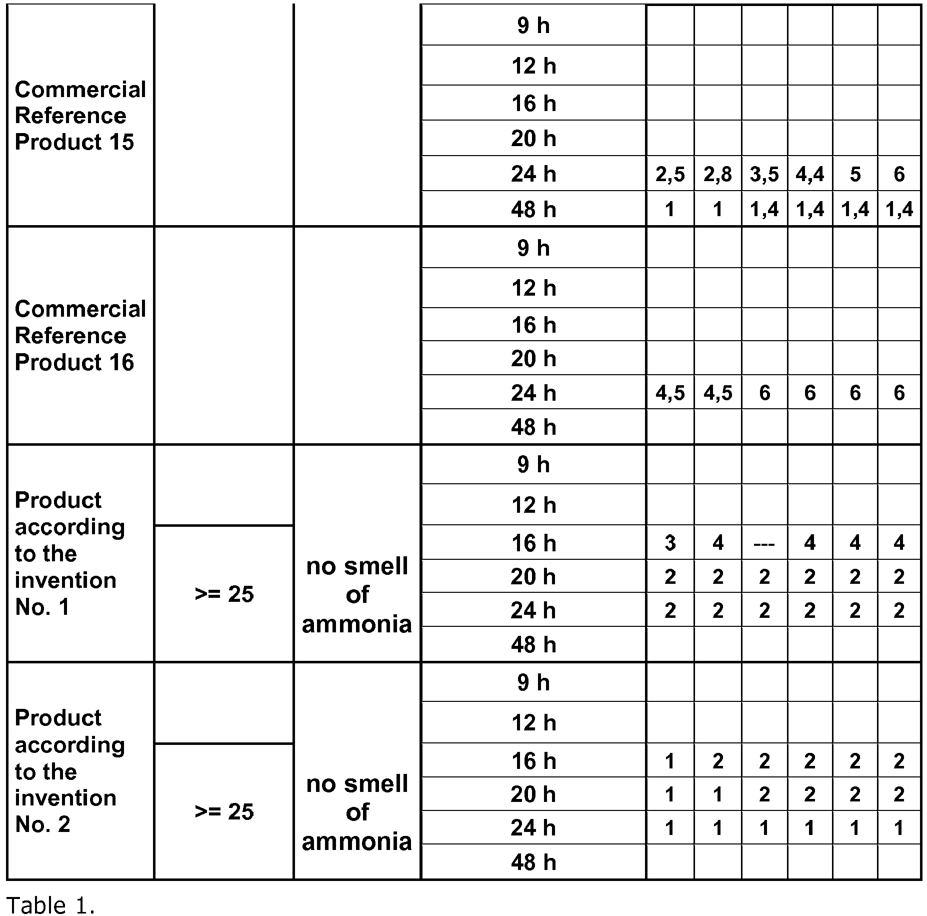

## Claims

1. Organic render composition, comprising
- a component (i) comprising at least one acrylic ester-styrene-copolymer;
- a component (ii) comprising a first earth alkali carbonate having a D₅₀ of 10 to 60 µm, in particular 20 to 50 µm and a second earth alkali carbonate having a D₅₀ of 3 to 10 µm, in particular 4 to 8 µm;
- a component (iii) comprising at least one compound selected from
• a cellulose ether;
• a phyllosilicate;
• a non-ionogenic fatty acid derivative.

2. Organic render composition according to claim 1, wherein the composition comprises a component (i) in an amount of 5 to 20 wt.-%, in particular 6 to 15 wt.-%, based on the total weight of the composition.

3. Organic render composition according to claim 1 or 2, wherein component (i) comprises at least one acrylic ester-styrene-copolymer and at least one silicon resin.

4. Organic render composition according to at least one of the preceding claims, wherein component (i) comprises at least one acrylic ester-styrene-copolymer in an amount of 5 to 20 wt.-%, in particular 6 to 15 wt.-%, and at least one silicon resin in an amount of up to 15 wt.-%, in particular 0.1 to 8 wt.-%, based on the total weight of the organic render composition.

5. Organic render composition according to any of the preceding claims, wherein component (ii) additionally comprises diatomaceous earth, in particular calcinated diatomaceous earth.

6. Organic render composition according to any of the preceding claims, whereby component (ii) comprises
• an earth alkali carbonate having a D₅₀ of 10 to 60 µm, in particular 20 to 50 µm, in an amount of 5 to 30 wt.-%, in particular 9 to 17 wt.-%, based on the total weight of the organic render composition;
• an earth alkali carbonate having a D₅₀ of 3 to 10 µm, in particular 4 to 8 µm, in an amount of 1 to 15 wt.-%, in particular 4 to 12 wt.-%, based on the total weight of the organic render composition;
• a diatomaceous earth in an amount of 0 to 10 wt.-%, in particular 2 to 8 wt.-%, based on the total weight of the organic render composition.

7. Organic render composition according to any of the preceding claims, whereby component (iii) comprises at least one compound selected from
• a cellulose ether in an amount of 0 to 0.4 wt.-%, in particular 0.01 to 0.3 wt.-%, based on the total weight of the organic render composition;
• a phyllosilicate in an amount of 0 to 2 wt.-%, in particular 0.01 to 0.7 wt.-%, based on the total weight of the organic render composition;
• a non-ionogenic fatty acid derivative in an amount of 0 to 3 wt.-%, in particular 0.2 to 2.5 wt.-%, based on the total weight of the organic render composition.

8. Organic render composition according to any of the preceding claims, whereby the organic render composition additionally comprises
- a component (iv) comprising at least one compound selected from
• an organic fiber material, e.g. a polyethylene fiber material;
• a mineral fiber material, e.g. a fiber material based on calcium, aluminum, magnesium silicate fibers;
∘ and/or a glass fiber material.

9. Organic render composition according to any of the preceding claims, whereby the organic render composition additionally comprises water, preferably in an amount of up to 20 wt.-%, in particular 5 to 15 wt.-%, based on the total weight of the organic render composition.

10. Organic render composition according to any of the preceding claims, whereby the organic render composition further comprises at least one additive selected from
- pigments;
- flame retarders;
- aggregates, like e.g. calcium carbonate and/or dolomite having a grain fraction from 0.5 to 6 mm, in particular 0.5 to 3 mm;
- dispersants selected from polyphosphates;
- rheology aids, in particular selected from polycarboxylates and/or methacrylic acid-acrylic acid ester copolymers, and polyurethanes;
- pH adjusters;
- foam inhibitors, in particular in form of mineral oils and/or silicon based inhibitors;
- film builders, in particular in form of aliphatic dicarboxylic acid esters;
- hydrophobing agents, in particular in form of aqueous emulsions of polysilanes and polysiloxanes;
- biocides, in particular on the basis of isothiazolinones, in particular octyl isothiazolinones, CIT, MIT, BIT, CMIT, and/or zinc pyrothiones, and/or zinc oxide, and/or Diuron, and/or Terbutryn.

11. Organic render composition according to any of the preceding claims, consisting essentially of
- a component (i) comprising at least one acrylic ester-styrene-copolymer and optionally at least one silicon resin
- a component (ii) comprising a first earth alkali carbonate having a D₅₀ of 10 to 60 µm, in particular 20 to 50 µm, and a second earth alkali carbonate having a D₅₀ of 3 to 10 µm, in particular 4 to 8 µm;
- a component (iii) comprising at least one compound selected from
• a cellulose ether;
• a phyllosilicate;
• a non-ionogenic fatty acid derivative;
- optionally a component (iv) comprising at least one compound selected from
• a polyethylene fiber material;
• a fiber material based on calcium, aluminum, magnesium silicate fibers;
• a glass fiber material;
- optionally water, preferably in an amount of up to 20 wt.-%, in particular 5 to 12 wt.-%, based on the total weight of the organic render composition;
- optionally one or more pigments;
- optionally one or more flame retarders;
- optionally one or more aggregates, like e.g. calcium carbonate and/or dolomite having a grain fraction from 0.5 to 6 mm, in particular 0.5 to 3 mm;
- optionally one or more dispersants selected from polyphosphates;
- optionally one or more rheology aids, in particular selected from polycarboxylates and/or methacrylic acid-acrylic acid ester copolymers, and polyurethanes;
- optionally one or more pH adjusters;
- optionally one or more foam inhibitors, in particular in form of mineral oils and/or silicon based inhibitors;
- optionally one or more film builders, in particular in form of aliphatic dicarboxylic acid esters;
- optionally one or more hydrophobing agents, in particular in form of aqueous emulsions of polysilanes and polysiloxanes;
- optionally one or more biocides, in particular on the basis of isothiazolinones, in particular octyl isothiazolinones, CIT, MIT, BIT, CMIT, and/or zinc pyrothiones, and/or zinc oxide, and/or Diuron, and/or Terbutryn.

12. Organic render composition according to any of the preceding claims, consisting essentially of
- a component (i) comprising at least one acrylic ester-styrene-copolymer in an amount of 5 to 20 wt.-%, in particular 6 to 15 wt.-% and optionally at least one silicon resin in an amount of up to 15 wt.-%, in particular 0.1 to 8 wt.-%;
- a component (ii) comprising a first earth alkali carbonate having a D₅₀ of 10 to 60 µm, in particular 20 to 50 µm, and a second earth alkali carbonate having a D₅₀ of 3 to 10 µm, in particular 4 to 8 µm;
- a component (iii) comprising at least one compound selected from
• a cellulose ether in an amount of 0 to 0.4 wt.-%, in particular 0.01 to 0.3 wt.-%;
• a phyllosilicate in an amount of 0 to 2 wt.-%, in particular 0.01 to 0.7 wt.-%;
• a non-ionogenic fatty acid derivative in an amount of 0 to 3 wt.-%, in particular 0.2 to 2.5 wt.-%;
- a component (iv) comprising at least one compound selected from
• a polyethylene fiber material;
• a fiber material based on calcium, aluminum, magnesium silicate fibers;
• a glass fiber material;
- optionally water, preferably in an amount of up to 20 wt.-%, in particular 5 to 12 wt.-%, based on the total weight of the organic render composition;
- optionally one or more pigments;
- optionally one or more flame retarders;
- optionally one or more of calcium carbonate and/or dolomite having a grain fraction of 0.5 to 6 mm, in particular 0.5 to 3 mm;
- optionally one or more dispersants selected from polyphosphates;
- optionally one or more rheology aids, in particular selected from polycarboxylates and/or methacrylic acid-acrylic acid ester copolymers, and polyurethanes;
- optionally one or more pH adjusters;
- optionally one or more foam inhibitors, in particular in form of mineral oils and/or silicon based inhibitors;
- optionally one or more film builders, in particular in form of aliphatic dicarboxylic acid esters;
- optionally one or more hydrophobing agents, in particular in form of aqueous emulsions of polysilanes and polysiloxanes;
- optionally one or more biocides, in particular on the basis of isothiazolinones, in particular octyl isothiazolinones, CIT, MIT, BIT, CMIT, and/or zinc pyrothiones, and/or zinc oxide, and/or Diuron, and/or Terbutryn.

13. Use of an organic render composition according to any of the preceding claims for exterior use on a building substrate, like e.g. facades, walls or ceilings of a building.

14. Use of an organic render composition according to any of claims 1 to 12 for exterior use on an insulated building substrate.

15. Use of an organic render composition according to any of claims 1 to 12 for exterior use and as a component in an External Thermal Insulation Composite System (ETICS).
